# EUROPÄISCHE PATENTANMELDUNG

(11) **EP 4 657 011 A1**
(43) Veröffentlichungstag der Anmeldung: **03.12.2025**
(21) Anmeldenummer: 24178585.6
(22) Anmeldetag: 28.05.2024
(51) Int. Cl.: G01B 11/06

(54) **VERFAHREN UND SYSTEM ZUM BESTIMMEN EINER SCHICHTDICKE ODER EINER FLÄCHENBELEGUNGSDICHTE EINER BESCHICHTUNG EINES PRÜFOBJEKTS**

(71) Anmelder: Fraunhofer-Gesellschaft zur Förderung der angewandten Forschung e.V., 80686 München (DE)
(72) Erfinder: Hauer, Benedikt, 79110 Freiburg (DE)
(74) Vertreter: WSL Patentanwälte Partnerschaft mbB

(57) **Zusammenfassung**

Die vorliegenden Erfindung betrifft ein Verfahren zum Bestimmen einer Schichtdicke oder einer Flächenbelegungsdichte einer Beschichtung eines Prüfobjekts, wobei das Prüfobjekt die Beschichtung und ein Substrat mit einer Substratdicke aufweist, wobei die Beschichtung auf das Substrat aufgebracht ist, wobei die Schichtdicke kleiner ist als die Substratdicke und wobei das Verfahren die Schritte aufweist: Erzeugen von elektromagnetischer Charakterisierungsstrahlung mit einem Charakterisierungswellenlängenbereich aus einem Bereich von 780 Nanometern bis 1 Millimeter, wobei die Beschichtung eine Absorptionsbande innerhalb des Charakterisierungswellenlängenbereichs aufweist, Beleuchten des Prüfobjekts mit der Charakterisierungsstrahlung, Erfassen einer Charakterisierungsintensität der von dem Prüfobjekt oder einer spiegelnden Fläche hinter dem Prüfobjekt zurückreflektierten Charakterisierungsstrahlung und Ableiten der Schichtdicke oder der Flächenbelegungsdichte aus der Charakterisierungsintensität. Dabei ist erfindungsgemäß vorgesehen, dass die Substratdicke 250 Mikrometer oder weniger beträgt und das Beleuchten und das Erfassen derart erfolgen, dass bei dem Erfassen Charakterisierungsstrahlung erfasst wird, deren Einfallswinkel bezogen auf ein Einfallslot auf einer Oberfläche der Beschichtung jeweils in zumindest einer Ebene über einen Bereich von mindestens 20 Grad variieren.

## Beschreibung

Die vorliegende Erfindung betrifft ein Verfahren und ein System zum Bestimmen einer Schichtdicke oder einer Flächenbelegungsdichte einer Beschichtung eines Prüfobjekts. Dabei weist das Prüfobjekt die Beschichtung und ein Substrat mit einer Substratdicke auf, wobei die Beschichtung auf das Substrat aufgebracht ist und wobei die Schichtdicke kleiner ist als die Substratdicke.

Ein solches Verfahren umfasst die Schritte: Erzeugen von elektromagnetischer Charakterisierungsstrahlung mit einem Charakterisierungswellenlängenbereich aus einem Bereich von 780 Nanometer bis 1 Millimeter, wobei die Beschichtung eine Absorptionsbande innerhalb des Charakterisierungswellenlängenbereichs aufweist, Beleuchten des Prüfobjekts mit der Charakterisierungsstrahlung, Erfassen einer Charakterisierungsintensität der von dem Prüfobjekt oder einer spiegelnden Fläche hinter dem Prüfobjekt zurückreflektierten Charakterisierungsstrahlung und Ableiten der Schichtdicke oder der Flächenbelegungsdichte aus der Charakterisierungsintensität.

Das entsprechende System weist auf: Eine Beleuchtungseinrichtung, wobei die Beleuchtungseinrichtung derart eingerichtet ist, dass sie in einem Betrieb des Systems elektromagnetische Charakterisierungsstrahlung mit einem Charakterisierungswellenlängenbereich aus einem Bereich von 780 Nanometer bis 1 Millimeter erzeugt und abstrahlt, wobei die Beleuchtungseinrichtung derart eingerichtet und angeordnet ist, dass sie in dem Betrieb des Systems das Prüfobjekt mit der Charakterisierungsstrahlung beleuchtet, eine Detektionseinrichtung, wobei die Detektionseinrichtung derart eingerichtet und angeordnet ist, dass die Detektionseinrichtung in dem Betrieb des Systems eine Charakterisierungsintensität der von dem Prüfobjekt oder einer spiegelnden Fläche hinter dem Prüfobjekt zurückreflektierten Charakterisierungsstrahlung erfasst, und eine Auswerteinrichtung, wobei die Auswerteinrichtung derart wirksam mit der Detektionseinrichtung verbunden ist, dass die Auswerteinrichtung in dem Betrieb des Systems ein die Charakterisierungsintensität repräsentierendes Charakterisierungssignal von der Detektionseinrichtung erhält, wobei die Auswerteinrichtung derart eingerichtet ist, dass die Auswerteinrichtung in dem Betrieb des Systems die Schritte ausführt: Ableiten der Schichtdicke oder der Flächenbelegungsdichte aus dem Charakterisierungssignal und Ausgeben der Schichtdicke oder der Flächenbelegungsdichte.

Aus dem Stand der Technik sind eine Reihe von Verfahren bekannt, um die Schichtdicke oder die Flächenbelegungsdichte einer Beschichtung auf einem Substrat zu bestimmen. Bei den Prüfobjekten im Sinne der vorliegenden Anmeldung handelt es sich insbesondere um dünne Beschichtungen, sogenannte Nanobeschichtungen, aus anorganischen Materialien auf Substraten aus Kunststoff. Derartige Materialkombinationen werden beispielsweise in der Lebensmittelverpackung in Form von Behältern und Folien, aber auch im Bereich der pharmazeutischen Verpackungen eingesetzt. Die Beschichtungen ermöglichen es, dem Kunststoffmaterial Eigenschaften, wie z.B. Dichtheit für ausgewählte Gase, zu verleihen, die der Kunststoff als solcher nicht hat.

Für die Bestimmung der Schichtdicke oder der Flächenbelegungsdichte eines Prüflings wurden eine Reihe von ganz unterschiedlichen Verfahren entwickelt, die je nach Anwendungsgebiet zum Einsatz kommen. Eine direkte Messung der Barriereeigenschaft eine Beschichtung kann anhand von Stichproben durch Messung der Gasdurchlässigkeit der Beschichtung auf dem Substrat erfolgen. Auch Kontaktwinkelmessungen, Testtinte oder Einfärbung sind möglich, eignen sich jedoch ebenfalls nurfür stichprobenartige Prüfungen. Auf hochreflektierenden Substraten, beispielsweise Metallen oder Halbleitern können Verfahren der Reflektometrie zum Einsatz kommen, um die jeweilige Beschichtung zu charakterisieren, und bei glatten Substraten können Verfahren der Ellipsometrie genutzt werden. Röntgenfluoreszenz-Verfahren sind hingegen ausschließlich für ebene Substrate geeignet.

Da in der Regel das Material der Beschichtung bekannt ist, lassen sich auch spezifische Absorptions- oder Reflexionsbanden, insbesondere im infraroten Spektralbereich, mithilfe von Absorptions- bzw. Reflexionsmessungen adressieren. Diese Messtechniken sind insbesondere für anorganische Beschichtungen geeignet, die polare Bindungen aufweisen. Eine Möglichkeit mithilfe von Infrarotstrahlung eine Beschichtung nachzuweisen oder ihre Schichtdicke oder Flächenbelegungsdichte zu bestimmen, ist die Verwendung von Infrarotspektrometern. Solche sind jedoch apparativ aufwendig und mit vergleichsweise hohen Kosten verbunden.

Eine etablierte Technik, welche die Reflexion infraroter Strahlung an einer Beschichtung auf einem auf Substrat erfasst, wird als Infrarot-Reflexions-Absorptions-Spektroskopie (Englisch: infrared reflection absorption spectroscopy, kurz: IRRAS oder IRAS) bezeichnet.

Messungen im infraroten Spektralbereich in Reflexion haben sich aber unter bestimmten Messbedingungen als unzuverlässig erwiesen. So verfälschen dünne Substrate oder Substrate mit einer über ihre Fläche variierenden Substratdicke die Messergebnisse und machen gegebenenfalls eine aussagekräftige Messung der Schichtdicke oder Flächenbelegungsdichte unmöglich. Ähnliches gilt für Verkippungen der zu messenden Oberfläche des Prüfobjekts oder Krümmungen der zu messenden Oberfläche. Dies gilt insbesondere für Substrate, welche für die Charakterisierungsstrahlung transparent sind.

Demgegenüber liegt der vorliegenden Erfindung die Aufgabe zugrunde, ein Verfahren und ein System zum Bestimmen einer Schichtdicke oder einer Flächenbelegungsdichte einer Beschichtung eines Prüfobjekts bereitzustellen, die es ermöglichen die Bestimmung für eine Beschichtung auf einem dünnen Substrat durchzuführen. Ferner ist es eine Aufgabe der vorliegenden Erfindung, eine solche Bestimmung für ein Prüfobjekt mit einem für die verwendete Charakterisierungsstrahlung transparenten Substrat durchzuführen. Ferner ist es eine Aufgabe der vorliegenden Erfindung, ein Verfahren und ein System zum Bestimmen einer Schichtdicke oder einer Flächenbelegungsdichte einer Beschichtung eines Prüfobjekts mit einem für die Charakterisierungsstrahlung transparenten Substrat bereitzustellen.

Es ist auch eine Aufgabe der vorliegenden Erfindung ein Verfahren und ein System bereitzustellen, welche in der 100 % Prüfung inline eingesetzt werden können. Dabei bedeutet inline, dass die Prüfung in der Produktionsumgebung, typischerweise unmittelbar nach dem Aufbringen der Beschichtung erfolgt, um festzustellen, dass das hergestellte Objekt oder Halbzeug den gesetzten Anforderungen entspricht. Eine Inline-Prüfung stellt hohe Anforderungen an die Messgeschwindigkeit des eingesetzten Verfahrens und den Bauraum des verwendeten Systems.

Zumindest eine der zuvor genannten Aufgaben wird durch ein Verfahren gemäß dem unabhängigen Anspruch 1 gelöst. Dazu beträgt bei dem Verfahren der eingangs genannten Art die Substratdicke 250 Mikrometer oder weniger und das Beleuchten und das Erfassen erfolgt derart, dass bei dem Erfassen Charakterisierungsstrahlung erfasst wird, deren Einfallswinkel bezogen auf ein Einfallslot auf einer Oberfläche der Beschichtung jeweils in zumindest einer Ebene über einen Bereich von mindestens 20 Grad variieren.

Es hat sich herausgestellt, dass die Infrarot-Reflexions-Absorptions-Spektroskopie primär für dünne Substrate versagt, insbesondere dann, wenn es sich um für die Charakterisierungsstrahlung weitgehend transparente Substrate handelt. Dies kann darauf zurückgeführt werden, dass solche Substrate Teile der Charakterisierungsstrahlung an ihren beiden Grenzflächen reflektieren. Aufgrund der dünnen Substratdicke kommt es zu Dünnschichtinterferenzen (auch als Dünnfilminterferenzen bezeichnet). Der Einfluss dieser Dünnschichtinterferenzen im Substrat auf die Charakterisierungsintensität ist viel ausgeprägter als der Einfluss der Absorption durch Beschichtung auf die Charakterisierungsintensität.

Wenn zusätzlich auch noch die Substratdicke über das Prüfobjekt hinweg variiert, so macht dies den Nachweis der Beschichtung und die Bestimmung der Schichtdicke bzw. der Flächenbelegungsdichte weitgehend unmöglich.

Es ist die der vorliegenden Erfindung zugrunde liegende Idee die Bestimmung der Schichtdicke oder der Flächenbelegungsdichte einer Beschichtung eines Prüfobjekts auf einem Substrat mit einer Substratdicke von 250 Mikrometer oder weniger dadurch zu ermöglichen, dass die Charakterisierungsstrahlung, die auf die Oberfläche der Beschichtung auftrifft über mindestens 20 Grad variierende Einfallswinkel bezogen auf ein Einfallslot auf der Oberfläche aufweist. Durch diese große Variation der Einfallswinkel mitteln sich Einflüsse aufgrund von Dünnschichtinterferenzen heraus und die Schichtdicke oder die Flächenbelegungsdichte kann präzise erfasst werden.

Das erfindungsgemäße Verfahren misst unter Ausnutzung einer infraroten Schwingungsbande eines Materials der Beschichtung die Schichtdicke oder die Flächenbelegungsdichte quantitativ in einer Reflexionsanordnung.

In einer Ausführungsform wird der Charakterisierungswellenlängenbereich an die spektrale Position der Absorptionsbande angepasst, so dass der Charakterisierungswellenlängenbereich nicht deutlich größer ist als die Absorptionsbande, vorzugsweise nur 10 % oder weniger größer ist als die Absorptionsbande.

Im Sinne der vorliegenden Anmeldung ist Flächenbelegungsdichte die Massendichte der Beschichtung auf dem Substrat multipliziert mit der Schichtdicke. Bei dünnen Schichten ist die erfasste Charakterisierungsintensität der von dem Prüfobjekt oder einer spiegelnden Fläche hinter dem Prüfobjekt zurückreflektierten Charakterisierungsstrahlung ein Maß für diese Flächenbelegungsdichte.

In einer Ausführungsform der Erfindung ist der Charakterisierungswellenlängenbereich breitbandig aus dem Bereich von 780 Nanometer bis 1 Millimeter gewählt. In einer Ausführungsform der Erfindung hat die Charakterisierungsstrahlung eine aus dem Charakterisierungswellenlängenbereich ausgewählte Bandbreite von 100 Nanometer bis 7 Mikrometer. Ist beispielsweise die Beschichtung SiOₓ, so hat der Charakterisierungswellenlängenbereich in einer Ausführungsform eine Bandbreite von 400 Nanometer um eine Zentralwellenlänge vom 9,4 Mikrometer. Ist beispielsweise die Beschichtung AlOₓ, so hat der Charakterisierungswellenlängenbereich in einer Ausführungsform eine Bandbreite von 5 Mikrometer um eine Zentralwellenlänge vom 11 Mikrometer.

In einer Ausführungsform der Erfindung erfolgen das Beleuchten und das Erfassen derart, dass Charakterisierungsstrahlung und optional Referenzstrahlung erfasst wird, deren Einfallswinkel bezogen auf das Einfalllot zumindest in der einen Ebene über einen Bereich von mindestens 30 Grad variieren. In einer Ausführungsform der Erfindung variieren die Einfallswinkel bezogen auf das Einfalllot zumindest in der einen Ebene über einen Bereich von bis zu 60 Grad.

Dabei hat in einer Ausführungsform die auf die Oberfläche der Beschichtung auftreffende Charakterisierungsstrahlung und optional Referenzstrahlung einen mittleren Einfallswinkel aus einem Bereich von 30 Grad bis 60 Grad. Mit der notwendigen Variation von 20 Grad variieren dann die Einfallswinkel der Charakterisierungsstrahlung und optional der Referenzstrahlung von 20 Grad bis 40 Grad bei einem mittleren Einfallswinkel von 30 Grad und von 50 Grad bis 70 Grad bei einem mittleren Einfallswinkel von 60 Grad.

In einer Ausführungsform der Erfindung beträgt die Substratdicke 100 Mikrometer oder weniger, vorzugsweise 50 Mikrometer oder weniger und besonders bevorzugt 30 Mikrometer oder weniger. In einer Ausführungsform der Erfindung beträgt die Substratdicke 12 Mikrometer. Substratdicken von 12 Mikrometer haben sich als ein Standard bei der Herstellung von Folien, insbesondere aus Kunststoff, herausgebildet.

In einer Ausführungsform der Erfindung variiert die Substratdicke über die Oberfläche des Prüfobjekts hinweg. In einer Ausführungsform variiert die Substratdicke über die Oberfläche des Prüfobjekts über 5% und mehr, insbesondere über 10% und mehr.

In einer Ausführungsform der Erfindung wird das Prüfobjekt während des Erfassens der Charakterisierungsstrahlung und optional der Referenzstrahlung in einer Bewegungsrichtung senkrecht zu dem Einfallslot bewegt. Eine solche Bewegung, wie sie in manchen Produktionsumgebungen, beispielsweise in Rolle zu Rolle Prozessen, ohnehin auftritt, aber auch durch das gezielte Einführen einer Relativbewegung zwischen dem Prüfobjekt und der Messvorrichtung bereitgestellt werden kann, mittelt ebenfalls Dünnschichtinterferenzeffekte heraus.

Beispielsweise werden in einer Ausführungsform der Erfindung das Prüfobjekt und die Messvorrichtung mittels eines Shakers oszillierend relativ zueinander bewegt.

In Ausführungsformen der Erfindung ist die Reflexion am Prüfobjekt ausreichend, um eine aussagekräftige Charakterisierungsintensität zu erfassen. Bei sehr dünnen, für die Charakterisierungsstrahlung weitgehend transparenten Substraten, beispielsweise Polymerfolien mit einer Dicke von weniger als 50 Mikrometer, ist es erfindungsgemäß aber auch möglich, in der Strahlrichtung der Charakterisierungsstrahlung und optional der Referenzstrahlung hinter dem Substrat eine reflektierende Fläche, d.h. insbesondere einen metallischen Spiegel oder einen dielektrischen Spiegel, vorzusehen.

In einer Ausführungsform weist das Substrat eine geringe Absorption für die Charakterisierungsstrahlung und optional für die Referenzstrahlung auf. Dies ist der Fall, wenn die Dicke des Substrats etwa gleich groß ist wie die Absorptionslänge der Charakterisierungsstrahlung und optional der Referenzstrahlung in dem Substrat. Dabei ist die Absorptionslänge die Länge des Substrats über welche die Intensität der Charakterisierungsstrahlung und optional der Referenzstrahlung bei einer Transmission auf 1/e abfällt. Ein solches Substrat wird als transparent für die Charakterisierungsstrahlung angesehen. In einer Ausführungsform der Erfindung ist das Substrat für die Charakterisierungsstrahlung und optional für die Referenzstrahlung transparent.

In einer Ausführungsform der Erfindung weist das Verfahren weiterhin die Schritte auf: Erzeugen von elektromagnetischer Referenzstrahlung mit einem Referenzwellenlängenbereich aus einem Bereich von 780 Nanometer bis 1 Millimeter, wobei die Absorptionsbande der Beschichtung außerhalb des Referenzwellenlängenbereichs liegt, Beleuchten des Prüfobjekts mit der Referenzstrahlung, Erfassen einer Referenzintensität der von dem Prüfobjekt oder der spiegelnden Fläche hinter dem Prüfobjekt zurückreflektierten Referenzstrahlung, wobei das Ableiten der Schichtdicke oder Flächenbelegungsdichte aus der Charakterisierungsintensität ein normieren der Charakterisierungsintensität mit der Referenzintensität zu einer normierten Charakterisierungsintensität umfasst. Ein solches Vorgehen reduziert Messfehler aufgrund einer nicht optimalen Ausrichtung der optischen Messanordnung und erhöht damit die Messgenauigkeit der Schichtdicke oder der Flächenbelegungsdichte. Ein Verfahren mit diesen Schritten wird auch als differenzielles Verfahren bezeichnet.

In einer Ausführungsform der Erfindung besteht die Beschichtung aus einem anorganischen Material. In einer Ausführungsform der Erfindung dient die Beschichtung als funktionale Schicht, insbesondere als Barriereschicht auf dem Substrat. In einer Ausführungsform umfasst die Beschichtung Siliziumoxid (SiOₓ), eine siloxanhaltige Substanz, insbesondere HMDSO, oder Aluminiumoxid (Al_{y}Oₓ). In einer Ausführungsform umfasst die Beschichtung SiOₓ oder besteht die Beschichtung aus SiOₓ, wobei x etwa 0,5 bis etwa 2,4 beträgt. In einer Ausführungsform umfasst die Beschichtung SiOz oder besteht die Beschichtung aus SiOz. In einer Ausführungsform umfasst die Beschichtung Al₂O₃ oder besteht die Beschichtung aus Al₂O₃. In einer Ausführungsform der Erfindung liegt die Schichtdicke der Beschichtung in einem Bereich von 1 Nanometer bis 500 Nanometer, vorzugsweise in einem Bereich von 10 Nanometer bis 200 Nanometer.

In einer Ausführungsform der Erfindung umfasst das Substrat ein Polymer.

Zumindest eine der eingangs genannten Aufgaben wird auch durch ein Verfahren zum Herstellen eines Produkts gelöst, wobei das Verfahren die Schritte aufweist: Bereitstellen eines Substrats, Abscheiden einer Beschichtung auf dem Substrat, Bestimmen einer Schichtdicke oder einer Flächenbelegungsdichte der Beschichtung mit einem Verfahren so wie es in Ausführungsformen davon zuvor beschrieben wurde. In einem solchen Verfahren bildet das Produkt mit dem Substrat und der Beschichtung das Prüfobjekt.

Insbesondere kann das erfindungsgemäße Verfahren für Beschichtungen eingesetzt werden, die thermisch oder plasmabasiert abgeschieden werden. In einer Ausführungsform der Erfindung ist das Substrat eine Folie mit einem Polymer oder ein Formkörper, beispielsweise ein Behälter, mit einem Polymer.

Zumindest eine der zuvor genannten Aufgaben wird auch durch ein System gemäß dem darauf gerichteten unabhängigen Anspruch gelöst. Dazu sind bei dem System der eingangs genannten Art die Beleuchtungseinrichtung und die Detektionseinrichtung derart ausgestaltet und angeordnet, dass in dem Betrieb des Systems das Beleuchten und das Erfassen derart erfolgen, dass bei dem Erfassen Charakterisierungsstrahlung erfasst wird, deren Einfallswinkel bezogen auf ein Einfallslot auf einer Oberfläche der Beschichtung jeweils in zumindest einer Ebene über einen Bereich von mindestens 20 Grad variieren.

Es versteht sich, dass in einer Ausführungsform auch das System so ausgestaltet ist, dass es zusätzlich Referenzstrahlung erzeugt und detektiert. Daher ist in einer Ausführungsform der Erfindung die Beleuchtungseinrichtung derart eingerichtet, dass sie in einem Betrieb des Systems elektromagnetische Referenzstrahlung mit einem Referenzwellenlängenbereich aus einem Bereich von 780 Nanometer bis 1 Millimeter erzeugt und abstrahlt, wobei der Referenzwellenlängenbereich und der Charakterisierungswellenlängenbereich voneinander verschieden sind, wobei die Beleuchtungseinrichtung derart eingerichtet und angeordnet ist, dass sie in dem Betrieb des Systems das Prüfobjekt mit der Referenzstrahlung beleuchtet, wobei die Detektionseinrichtung derart eingerichtet und angeordnet ist, dass die Detektionseinrichtung in den Betrieb des Systems eine Referenzintensität der von dem Prüfobjekt oder einer spiegelnden Fläche hinter dem Prüfobjekt zurück reflektierten Referenzstrahlung erfasst, und wobei die Auswerteeinrichtung derart wirksam mit der Detektionseinrichtung verbunden ist, dass die Auswerteeinrichtung im Betrieb des Systems ein die Referenzintensität repräsentierendes Referenzsignal erhält, wobei die Auswerteeinrichtung derart eingerichtet ist, dass das Ableiten der Schichtdicke aus dem Charakterisierungssignal ein Normieren des Charakterisierungssignals mit dem Referenzsignal zu einem normierten Charakterisierungssignal umfasst, wobei die Beleuchtungseinrichtung und die Detektionseinrichtung derart ausgestaltet und angeordnet sind, dass in dem Betrieb des Systems das Beleuchten und das Erfassen derart erfolgen, dass bei dem Erfassen Referenzstrahlung erfasst wird, deren Einfallswinkel bezogen auf ein Einfallslot auf einer Oberfläche der Beschichtung jeweils in zumindest einer Ebene über einen Bereich von mindestens 20 Grad variieren.

In einer Ausführungsform der Erfindung umfasst die Beleuchtungseinrichtung eine erste Strahlungsquelle für die Charakterisierungsstrahlung. In einer weiteren Ausführungsform umfasst die Beleuchtungseinrichtung eine zweite Strahlungsquelle für die Referenzstrahlung. In einer weiteren Ausführungsform umfasst die Beleuchtungseinrichtung eine einzige Strahlungsquelle, wobei die Strahlungsquelle ein thermischer Strahler ist, der gleichzeitig die Charakterisierungsstrahlung und die Referenzstrahlung erzeugt und abstrahlt.

Die Breitbandigkeit eines solchen thermischen Strahlers führt auch dazu, dass die Charakterisierungsstrahlung und optional die Referenzstrahlung nur eine geringe Kohärenzlänge aufweist und damit hilft, die auftretende Dünnschichtindifferenz weiter zu reduzieren.

In einer Ausführungsform umfasst die Beleuchtungseinrichtung eine Beleuchtungsoptik, vorzugsweise mit einer oder mehreren Linsen oder einem oder mehreren Hohlspiegeln.

In einer Ausführungsform der Erfindung umfasst die Detektionseinrichtung einen ersten pyroelektrischen Detektor für die Charakterisierungsstrahlung.

In einer Ausführungsform der Erfindung umfasst die Detektionseinrichtung sowohl den ersten pyroelektrischen Detektor als auch einem zweiten pyroelektrischen Detektor, wobei der erste pyroelektrische Detektor für die Charakterisierungsstrahlung und nicht für die Referenzstrahlung sensitiv ist und der zweite pyroelektrische Detektor für die Referenzstrahlung sensitiv ist.

Mit einer solchen Anordnung lassen sich die Charakterisierungsstrahlung und die Referenzstrahlung gleichzeitig erfassen. Beispielsweise kann der erste pyroelektrische Detektor einen anderen Wellenlängenfilter aufweisen als der zweite pyroelektrische Detektor. In einer Ausführungsform ist der zweite pyroelektrische Detektor für die Referenzstrahlung und für die Charakterisierungsstrahlung sensitiv. Jedoch ist eine Ausführungsform bevorzugt, bei welcher der zweite pyroelektrische Detektor für die Referenzstrahlung und nicht für die Charakterisierungsstrahlung sensitiv ist.

Weitere Vorteile, Merkmale und Anwendungsmöglichkeiten der vorliegenden Erfindung werden anhand der folgenden Beschreibung eine Ausführungsform und der dazugehörigen Figuren deutlich. In den Figuren sind gleiche Elemente mit identischen Bezugszeichen bezeichnet.
- Figur 1: ist eine schematische Querschnittsansicht durch ein System gemäß einer Ausführungsform der vorliegenden Erfindung.
- Figur 2: ist eine Auftragung des mit dem System aus Figur 1 messbaren Reflexionsvermögens eines Prüfobjekts aufgetragen gegen die Wellenzahl der Charakterisierungsstrahlung.
- Figur 3: ist eine schematische Querschnittsansicht durch ein System gemäß einer weiteren Ausführungsform der vorliegenden Erfindung mit einer verkippten Oberfläche des Prüfobjekts.
- Figur 4: ist eine schematische Querschnittsansicht durch ein System gemäß einer dritten Ausführungsform der vorliegenden Erfindung.

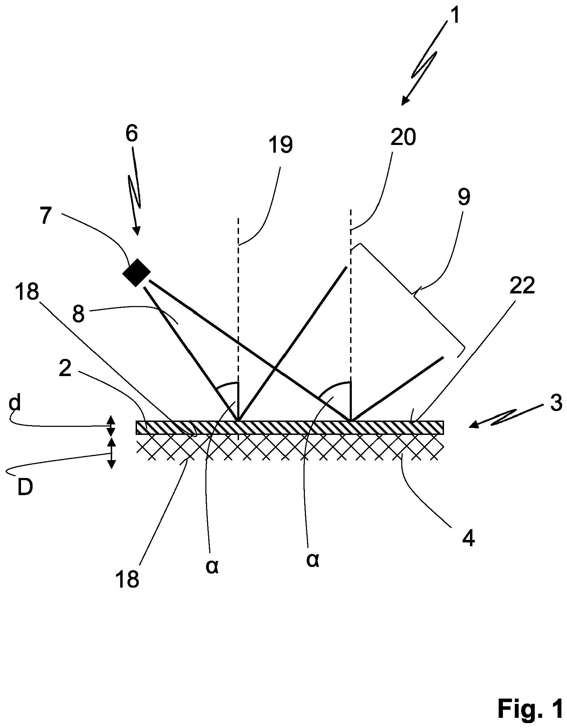

Figur 1 ist eine schematische Querschnittsansicht eines Systems zum Bestimmen einer Schichtdicke d einer Beschichtung 2 eines Prüfobjekts 3 gemäß einer Ausführungsform der vorliegenden Erfindung. Die Zeichnung ist schematisch, verdeutlicht aber das der vorliegenden Erfindung zugrunde liegende Messprinzip. Anhand der Figur wird auch das erfindungsgemäße Verfahren beschrieben.

Das System 1 ist in der beschriebenen Variante Teil einer Anlage zum Herstellen einer beschichteten Folie. Diese Folie bildet nach Beschichten das Prüfobjekt 3. Das Prüfobjekt 3 besteht daher aus einem Polyethylensubstrat 4 und einer Beschichtung 2 aus SiOₓ. Mit dem System 1 wird die Schichtdicke d der Beschichtung 2 quantitativ bestimmt.

Dazu weist das System 1 eine Beleuchtungseinrichtung 6 mit einem thermischen Strahler 7 auf, der in dem Betrieb des Systems 1 elektromagnetische Strahlung 8 im infraroten Spektralbereich breitbandig erzeugt. In der gezeigten Ausführungsform erzeugt der thermische Strahler 7 elektromagnetische Strahlung 8 mit Wellenlängen in einem Bereich von 1 Mikrometer bis 20 Mikrometer. Die von dem thermischen Strahler 7 abgestrahlte elektromagnetische Strahlung 8 dient sowohl als Charakterisierungsstrahlung 16 als auch als Referenzstrahlung 17.

Charakterisierungsstrahlung 16 und Referenzstrahlung 17 unterscheiden sich durch ihre Wellenlänge und damit, von welchem aus einem ersten pyroelektrischen Detektor 10 und einem zweiten pyroelektrischen Detektor 11 die jeweilige Strahlung 8 erfasst wird. Die Unterscheidung der elektromagnetischen Strahlung 8, die von dem thermischen Strahler 7 abgestrahlt wird, nach ihrer Wellenlänge in die Charakterisierungsstrahlung 16 auf der einen Seite und die Referenzstrahlung 17 auf der anderen Seite erfolgt erst innerhalb der Detektionseinrichtung 9. In Figur 1 ist der Strahlengang hin zu der Detektionseinrichtung 9 nur schematisch angedeutet.

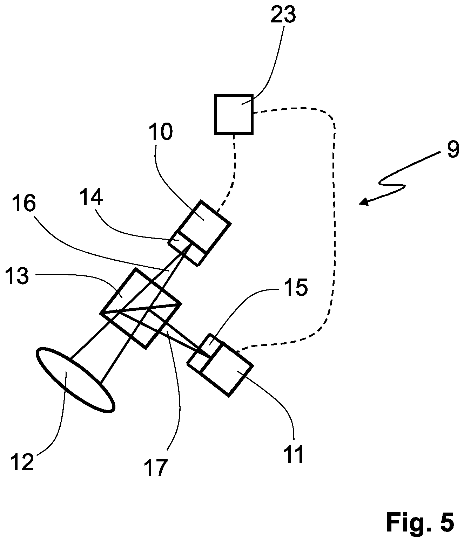

Figur 5 zeigt beispielhaft eine Ausgestaltung der Detektionseinrichtung 9. Ein Objektiv 12 bildet die elektromagnetische Strahlung auf den ersten pyroelektrischen Detektor 10 und den zweiten pyroelektrischen Detektor 11 ab. Dabei ist zwischen dem Objektiv 12 und den ersten und zweiten pyroelektrischen Detektoren 10, 11 ein Strahlteiler 13 vorgesehen, der die elektromagnetische Strahlung 8 zu gleichen Teilen auf die beiden Detektoren 10, 11 aufteilt. Vor jedem der Detektoren 10, 11 ist ein Wellenlängenfilter 14, 15 angeordnet. Dabei ist das erste Wellenlängenfilter 14 vor dem ersten pyroelektrischen Detektor 10 derart ausgestaltet, dass es nur die Charakterisierungsstrahlung auf den Detektor 10 fallen lässt, nicht aber die Referenzstrahlung. Umgekehrt ist das zweite Filter 15 so beschaffen, dass es nur die Referenzstrahlung auf den zweiten Detektor 11 treffen lässt, nicht aber die Charakterisierungsstrahlung.

Der Wellenlängenbereich der Charakterisierungsstrahlung 16 ist derart gewählt, dass zumindest eine Absorptionsbande des SiOₓ der Beschichtung 2 in diesen Charakterisierungswellenlängenbereich fällt. Demgegenüber ist der Referenzwellenlängenbereich der Referenzstrahlung 17 so gewählt, dass in diesem gerade keine Absorptionsbande der Beschichtung 2 liegt. Auf diese Weise kann die Charakterisierungsintensität der Charakterisierungsstrahlung 16 in einer Auswerteeinrichtung 23 auf die Referenzintensität der Referenzstrahlung 17 normiert werden.

Das Substrat 4 hat eine Substratdicke D von nur 12 Mikrometer. Da das Substrat 4 zwar weitgehend transparent für die elektromagnetische Strahlung 8 ist, aber dennoch Reflexionen an den vorderen und hinteren Grenzflächen 18 des Substrats 4 auftreten, kommt es zu Dünnschichtinterferenzen der elektromagnetischen Strahlung 8 an dem Substrat 4. Stellt man sich einen kollimierten Strahl der elektromagnetischen Strahlung 8 vor, so ist unmittelbar klar, dass seine Charakterisierungsintensität nach der Reflexion an dem Prüfobjekt 3 neben der Absorption durch die Beschichtung 5 davon abhängt, welche Wegdifferenz ein an der ersten Grenzfläche 18 des Substrats 4 reflektierter Anteil der Strahlung 8 verglichen mit einem an der zweiten Grenzfläche 18 des Substrats 4 reflektierten Anteil der Strahlung 8 hat. Ändert sich der Winkel, oder aber die Substratdicke D, so schwankt die Intensität aufgrund unterschiedlicher Dünnschichtinterferenz stärker als bei einer Variation des Schichtdicke d der Beschichtung 2.

Daher ist es die der Erfindung zugrunde liegende Idee, das Prüfobjekt 3 so zu beleuchten, dass die elektromagnetische Strahlung 8 unter einem möglichst großen Winkelbereich auf das Prüfobjekt 3 trifft. Dabei variieren in der gezeigten Ausführungsform die Einfallswinkel der elektromagnetischen Strahlung 8 über 30 Grad. Der Winkelbereich wird so gemessen, dass der Einfallswinkel der elektromagnetischen Strahlung 8 für alle im Wesentlichen radial von der Strahlungsquelle 7 ausgehenden Strahlen bezogen auf ein Einfallslot 19, 20 am jeweiligen Auftreffpunkt auf die Oberfläche 22 gemessen wird. In Figur 1 sind schematisch eine erstes Einfallslot 19 und ein zweites Einfallslot 20 für zwei ausgewählte Strahlen sowie die dazugehörigen Einfallswinkel α eingezeichnet.

Dann bildet die Charakterisierungsintensität der Charakterisierungsstrahlung in Strahlrichtung hinter dem Prüfobjekt 3 ein Maß für die Absorption durch die Beschichtung 2. Diese Absorption nimmt zu, wenn die Schichtdicke d größer ist und nimmt ab, wenn die Schichtdicke d kleiner wird. Somit ist die Charakterisierungsintensität ein direktes Maß für die Schichtdicke d der Beschichtung 2.

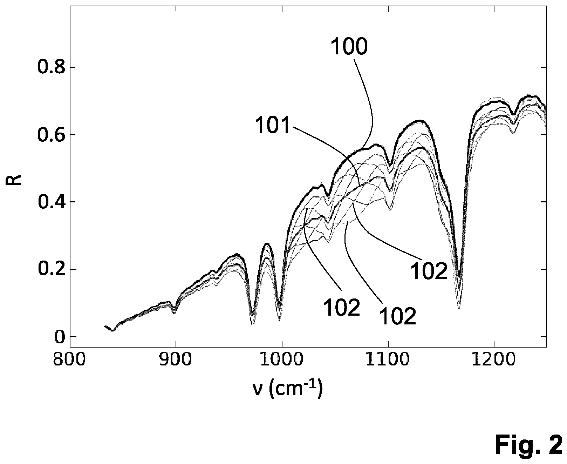

Figur 2 zeigt die sich aus der großen Variation der Einfallswinkel α der Charakterisierungsstrahlung 16 ergebende Mittelung. Die mit dem Bezugszeichen 100 bezeichnete schwarze Kurve gibt die reflektierte Charakterisierungsintensität der Charakterisierungsstrahlung von dem Prüfobjekt für das unbeschichtete Substrat 3 an. Die mit dem Bezugszeichen 101 bezeichnete Kurve zeigt den arithmetischen Mittelwert der Charakterisierungsstrahlung 16 für sechs verschiedene Einfallswinkel der Charakterisierungsstrahlung auf das Prüfobjekt 3 mit dem beschichteten Substrat 4. Die mit dem Bezugszeichen 102 bezeichneten Einzelkurven sind Messungen des Prüfobjekts 3 aufgenommen unter drei verschiedenen Reflexionswinkeln zwischen 35 Grad und 45 Grad zum jeweiligen Einfallslot 19, 20 des Objekts 3.

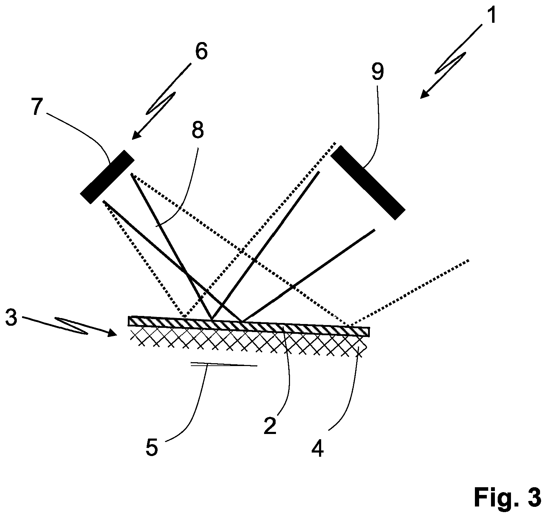

Figur 3 zeigt eine Ausführungsform des Systems mit einer größer ausgedehnten thermischen Strahlungsquelle sowie einem gegenüber der Anordnung aus Strahlungsquelle und Detektor um einen Kippwinkel 5 verkipptes Prüfobjekt 3.

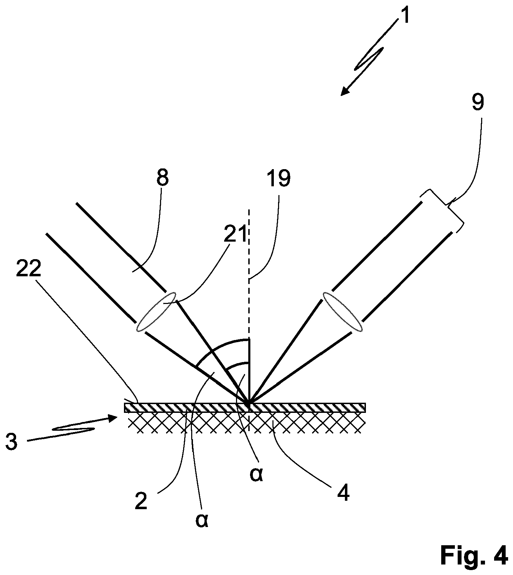

Da es für die effektive Mittelung über eine Mehrzahl von Einfallswinkeln α nur auf die verschiedenen Winkel ankommt, ist auch eine Ausführungsform realisierbar, so wie sie in Figur 4 dargestellt ist. Dabei wird die kollimierte Charakterisierungsstrahlung und Referenzstrahlung 8 mithilfe einer Linse 21 auf das Prüfobjekt 3 fokussiert. Auch ein solcher fokussierter Strahl verfügt über eine Schar von verschiedenen Einfallswinkeln α über den Strahlquerschnitt der Strahlung 8 hinweg.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: System
- 2: Beschichtung
- 3: Prüfobjekt
- 4: Polyethylensubstrat
- 5: Kippwinkel
- 6: Beleuchtungseinrichtung
- 7: thermischer Strahler
- 8: elektromagnetische Strahlung
- 9: Detektionseinrichtung
- 10: erster Detektor
- 11: zweiter Detektor
- 12: Objektiv
- 13: Strahlteiler
- 14: erstes Wellenlängenfilter
- 15: zweites Wellenlängenfilter
- 16: Charakterisierungsstrahlung
- 17: Referenzstrahlung
- 18: Grenzfläche
- 19: erstes Einfallslot
- 20: zweites Einfallslot
- 21: Linse
- 22: Oberfläche des Prüfobjekts
- 23: Auswerteeinrichtung

- 100: reflektierte Charakterisierungsintensität für das unbeschichtete Substrat
- 101: arithmetischer Mittelwert der Charakterisierungsstrahlung für sechs verschiedene Einfallswinkel
- 102: Messung für einen Einfallswinkel

- α: Einfallswinkel
- d: Schichtdicke
- D: Substratdicke

## Patentansprüche

1. Verfahren zum Bestimmen einer Schichtdicke (d) oder einer Flächenbelegungsdichte einer Beschichtung (2) eines Prüfobjekts (3),
wobei das Prüfobjekt (3) die Beschichtung (2) und ein Substrat (4) mit einer Substratdicke (D) aufweist,
wobei die Beschichtung (2) auf das Substrat (4) aufgebracht ist,
wobei die Schichtdicke (d) kleiner ist als die Substratdicke (D) und
wobei das Verfahren die Schritte aufweist
Erzeugen von elektromagnetischer Charakterisierungsstrahlung (16) mit einem Charakterisierungswellenlängenbereich aus einem Bereich von 780 Nanometern bis 1 Millimeter,
wobei die Beschichtung (2) eine Absorptionsbande innerhalb des Charakterisierungswellenlängenbereichs aufweist,
Beleuchten des Prüfobjekts (3) mit der Charakterisierungsstrahlung (16),
Erfassen einer Charakterisierungsintensität der von dem Prüfobjekt (3) oder einer spiegelnden Fläche hinter dem Prüfobjekt (3) zurückreflektierten Charakterisierungsstrahlung (16) und
Ableiten der Schichtdicke (d) oder der Flächenbelegungsdichte aus der Charakterisierungsintensität,
**dadurch gekennzeichnet, dass**
die Substratdicke (D) 250 Mikrometer oder weniger beträgt und
das Beleuchten und das Erfassen derart erfolgen, dass bei dem Erfassen Charakterisierungsstrahlung (16) erfasst wird, deren Einfallswinkel (a) bezogen auf ein Einfallslot (19, 20) auf einer Oberfläche (22) der Beschichtung (2) jeweils in zumindest einer Ebene über einen Bereich von mindestens 20 Grad variieren.

2. Verfahren nach dem vorhergehenden Anspruch, wobei das Beleuchten und das Erfassen derart erfolgen, dass bei dem Erfassen Charakterisierungsstrahlung (16) und optional Referenzstrahlung (17) erfasst wird, deren Einfallswinkel (a) bezogen auf das Einfallslot (19, 20) zumindest in der Ebene über einen Bereich von mindestens 30 Grad variieren.

3. Verfahren nach einem der vorhergehenden Ansprüche, wobei das Prüfobjekt (3) während des Erfassens der Charakterisierungsstrahlung (16) und optional einer Referenzstrahlung (17) in einer Bewegungsrichtung senkrecht zu dem Einfallslot bewegt wird.

4. Verfahren nach einem der vorhergehenden Ansprüche, wobei das Verfahren weiterhin die Schritte aufweist
Erzeugen von elektromagnetischer Referenzstrahlung (17) mit einem Referenzwellenlängenbereich aus einem Bereich von 780 Nanometern bis 1 Millimeter,
wobei die Absorptionsbande der Beschichtung (2) außerhalb des Referenzwellenlängenbereichs liegt,
Beleuchten des Prüfobjekts (3) mit der Referenzstrahlung (17),
Erfassen einer Referenzintensität der von dem Prüfobjekt (3) oder der spiegelnden Fläche hinter dem Prüfobjekt (3) zurückreflektierten Referenzstrahlung (17),
wobei das Ableiten der Schichtdicke (d) oder der Flächenbelegungsdichte aus der Charakterisierungsintensität ein Normieren der Charakterisierungsintensität mit der Referenzintensität zu einer normierten Charakterisierungsintensität umfasst.

5. Verfahren nach einem der vorhergehenden Ansprüche, wobei hinter dem Prüfobjekt (3) eine reflektierende Fläche angeordnet ist, an der die Charakterisierungsstrahlung (16) und optional die Referenzstrahlung (17) reflektiert werden.

6. Verfahren nach einem der vorhergehenden Ansprüche, wobei die Beschichtung (2) aus einem anorganischen Material besteht, wobei das anorganische Material vorzugsweise als funktionale Schicht, insbesondere als Barriereschicht, auf dem Substrat wirkt.

7. Verfahren nach einem der vorhergehenden Ansprüche, wobei die Schichtdicke (d) der Beschichtung (2) in einem Bereich von 1 Nanometer bis 500 Nanometer beträgt, vorzugsweise in einem Bereich von 10 Nanometer bis 100 Nanometer beträgt.

8. Verfahren nach einem der vorhergehenden Ansprüche, wobei das Substrat (4) ein Polymer umfasst.

9. Verfahren nach einem der vorhergehenden Ansprüche, wobei zumindest das Substrat (4) transparent für die Charakterisierungsstrahlung (16) und optional für die Referenzstrahlung (17) ist.

10. Verfahren zum Herstellen eines Produkts, mit den Schritten
Bereitstellen eines Substrats (4),
Abscheiden einer Beschichtung (2) auf dem Substrat (4) und
Bestimmen einer Schichtdicke (d) oder einer Flächenbelegungsdichte der Beschichtung (2) mit einem Verfahren nach einem der vorhergehenden Ansprüche.

11. System (1) zum Bestimmen einer Schichtdicke (d) oder einer Flächenbelegungsdichte eines Prüfobjekts mit einer auf ein Substrat (4) aufgebrachten Beschichtung (2),
wobei das System (1) aufweist
eine Beleuchtungseinrichtung (6),
wobei die Beleuchtungseinrichtung derart eingerichtet ist, dass sie in einem Betrieb des Systems elektromagnetische Charakterisierungsstrahlung (16) mit einem Charakterisierungswellenlängenbereich aus einem Bereich von 780 Nanometer bis 1 Millimeter erzeugt und abstrahlt,
wobei die Beleuchtungseinrichtung (6) derart eingerichtet und angeordnet ist, dass sie in dem Betrieb des Systems (1) das Prüfobjekt (3) mit
der Charakterisierungsstrahlung (16) beleuchtet,
einer Detektionseinrichtung (9),
wobei die Detektionseinrichtung (9) derart eingerichtet und angeordnet ist, dass die Detektionseinrichtung (9) in dem Betrieb des Systems eine Charakterisierungsintensität der von dem Prüfobjekt (3) oder einer spiegelnden Fläche hinter dem Prüfobjekt (3) zurückreflektierten Charakterisierungsstrahlung (16) erfasst, und
eine Auswerteeinrichtung (23),
wobei die Auswerteeinrichtung (23) derart wirksam mit der Detektionseinrichtung (9) verbunden ist, dass die Auswerteeinrichtung (23) in dem Betrieb des Systems (1) ein die Charakterisierungsintensität repräsentierendes Charakterisierungssignal von der Detektionseinrichtung (9) erhält,
wobei die Auswerteeinrichtung (23) derart eingerichtet ist, dass die Auswerteeinrichtung (23) in dem Betrieb des Systems (1) die Schritte ausführt
Ableiten der Schichtdicke (d) aus dem Charakterisierungssignal
und
Ausgeben der Schichtdicke (d),
**dadurch gekennzeichnet, dass**
die Beleuchtungseinrichtung (6) und die Detektionseinrichtung (9) derart ausgestaltet und angeordnet sind, dass in dem Betrieb des Systems (1) das Beleuchten und das Erfassen derart erfolgen, dass bei dem Erfassen Charakterisierungsstrahlung (16) erfasst wird, deren Einfallswinkel (a) bezogen auf ein Einfallslot (19, 20) auf einer Oberfläche (22) der Beschichtung (2) jeweils in zumindest einer Ebene über einen Bereich von mindestens 20 Grad variieren.

12. System (1) nach dem vorhergehenden Anspruch, wobei die Detektionseinrichtung (9) einen ersten pyroelektrischer Detektor (10) und einen zweiten pyroelektrischen Detektor (11) aufweist, wobei der erste pyroelektrische Detektor (10) derart ausgestaltet ist, dass er in dem Betrieb des Systems (1) für die Charakterisierungsstrahlung (16) und nicht für die Referenzstrahlung (17) sensitiv ist, und der zweite pyroelektrische Detektor (11) derart ausgestaltet ist, dass er für die Referenzstrahlung (17) sensitiv ist.

13. System (1) nach dem vorhergehenden Anspruch, wobei die Beleuchtungseinrichtung (6) einen thermischen Strahler als Strahlungsquelle aufweist, der gleichzeitig die Charakterisierungsstrahlung (16) und die Referenzstrahlung (17) erzeugt und abstrahlt.
